# EUROPÄISCHE PATENTSCHRIFT

(11) **EP 2 075 240 B1**
(45) Veröffentlichungstag und Bekanntmachung des Hinweises auf die Patenterteilung: **27.02.2013**
(21) Anmeldenummer: 07150265.2
(22) Anmeldetag: 20.12.2007
(51) Int. Cl.: C04B 40/00, C04B 28/02, C04B 22/06, C04B 24/04

(54) **Beschleuniger zur Reaktivierung von verzögerten zementösen Systemen**
Catalyst for reactivation of delayed cementitious systems
Accélérateur de réactivation de systèmes cimenteux retardés

(43) Veröffentlichungstag der Anmeldung: 01.07.2009
(73) Patentinhaber: Sika Technology AG, 6340 Baar (CH)
(72) Erfinder: Kurz, Christophe, 8107, Buchs (CH); Wombacher, Franz, 8916, Jonen (CH)
(74) Vertreter: Sika Patent Attorneys

(56) Entgegenhaltungen:
- EP-A- 0 602 541
- EP-A- 1 580 176
- WO-A-03/029163
- WO-A-2005/040059
- WO-A-2006/074739
- WO-A-2006/097316
- DE-B3-102005 054 190
- GB-A- 2 334 253
- US-A- 5 427 617
- EDMEADES, R.M. & HEWLETT, P.C.: "Cement admixtures" 1998, BUTTERWORTH-HEINEMANN , OXFORD , XP002480515 in: HEWLETT, P.C. (ed.): Lea's Chemistry of Cement and Concrete * Seiten 863-865 * * Seiten 869-871 *
- MOHOGUCHI T ET AL: "Agent for accelerating setting of cement concrete contains calcium, alkali aluminate and preset amount of hydrated activated alumina, aluminum hydroxide, and/or quaternary salt of polymethacrylate", WPI/THOMSON,, 1 January 2001 (2001-01-01), XP007916348,

## Beschreibung

### Technisches Gebiet

Die Erfindung betrifft das Gebiet der Reaktivierung von verzögerten zementösen Systemen. Insbesondere betrifft die vorliegende Erfindung einen Abbinde- und Erhärtungsbeschleuniger für zementöse Zusammensetzungen umfassend mindestens ein Aluminiumoxid und mindestens eine verzögernde Komponente, wobei die mindestens eine verzögernde Komponente eine organische Säure, deren Salz, ein Zuckerderivat, ein Phosphorsäurederivat, ein Phosphonsäurederivat und/oder eine Hydroxy- oder Polycarbonsäure ist. Zudem betrifft die Erfindung eine verarbeitbare, verzögerte zementöse Zusammensetzung, umfassend Zement, Wasser, mindestens einen Verzögerer und mindestens einen erfindungsgemässen Beschleuniger, die Verwendung des erfindungsgemässen Beschleunigers zur Reaktivierung einer verzögerten zementösen Zusammensetzung sowie das Verfahren zur Beschleunigung des Erstarrens und Erhärtens von verzögerten zementösen Zusammensetzungen.

### Stand der Technik

Die Hydratation von hydraulisch abbindenden Systemen zu kontrollieren, ist eine der schwierigsten Aufgaben in der Bauchemie. Eine Möglichkeit, die Abbindezeit von hydraulischen Bindemitteln, insbesondere von Zement, zu kontrollieren, besteht in der kontrollierten Verzögerung von Zementmassen gefolgt von nachfolgender Aktivierung der Zementhydratation. Eine Hydratationskontrolle ist in einer Anzahl von verschiedenen Situationen nützlich, beispielsweise beim Zurückgewinnen von nicht verbrauchtem Beton, in Situationen worin Beton an einem entfernten Ort bereitet und nachfolgend zum Arbeitsort aus Gründen des Preises und/oder der Annehmlichkeit in einem abbindeverzögerten Zustand transportiert wird oder bei Spritzbetonanwendungen, wo lange Arbeitszeiten gefolgt von raschen Abbindezeiten verlangt sind.

Es wird einerseits eine ausreichende Verzögerung des Abbindens benötigt, um den Transport von der Produktion zur Verarbeitungsstätte zu gewährleisten, andererseits ist ein möglichst schnelles Erhärten nach dem Einbringen an der Verarbeitungsstätte erwünscht. Da jedoch die Verarbeitungszeitpunkte auf der Baustelle variieren, kann keine exakte Verzögerung auf den genauen Einbringzeitpunkt festgelegt werden. Durch die daher benötigte höhere Dosierung an Verzögerer wird die Erhärtung verlangsamt.

Die Hydratationskontrolle kann beispielsweise durch Verwendung von zwei verschiedenen Zusatzmitteln erreicht werden, einem Verzögerer, um das Abbinden zu verzögern und einem Beschleuniger oder Aktivator, um das Abbinden des Zementsystems zu einem gewünschten Zeitpunkt zu aktivieren.

Es sind viele Substanzen bekannt, welche das Abbinden und Erhärten von Beton beschleunigen. Gebräuchlich sind beispielsweise stark alkalisch reagierende Stoffe wie Alkalihydroxide, Alkalicarbonate, Alkalisilikate, Alkalialuminate und Erdalkalichloride. Bei den stark alkalisch reagierenden Stoffen können jedoch unerwünschte Belästigungen des Verarbeiters, wie Verätzungen, auftreten und sie reduzieren die Endfestigkeit und die Dauerhaftigkeit des Betons.

Aus US5629048 sind Abbindebeschleuniger für Zementzubereitungen bekannt, welche wasserlösliche Salze, insbesondere Alkalimetallsalze der Zitronen-, Apfel- oder Zitra-Apfelsäure umfassen. EP0402319B1 beschreibt eine Zementzubereitung umfassend einen Härtungsverzögerer, einen Härtungsbeschleuniger, ein Zementdispergiermittel und ein langsam freisetzendes Zementdispergiermittel, wobei der Härtungsbeschleuniger aus den Carbonaten von Alkali- und Erdalkalimetallen, Aluminaten von Alkali- und erdalkalimetallen, calziniertem Alaun und Calciumaluminat ausgewählt wird.

Aus US5427617A1 ist ein Verfahren zur Wiederaufbereitung von ungebrauchten Betonmischungen bekannt, wobei vor der Aushärtung des Betons ein Verzögerer zugegeben wird und am Ende der gewünschten Verzögererperiode ein Beschleuniger zugegeben wird, um die Betonmischung wieder in einen härtbaren Zustand zu versetzen. Der Beschleuniger besteht aus einer Verbindung der Gruppe von Calciumsalzen, Thiocyanaten, Triäthanolamin und Glycoluril.

US5634972 beschreibt eine Methode zur Hydratationskontrolle von Wasser-Zement Mischungen, bestehend aus der Zugabe eines verzögernden Anteils eines Neutralsalzes einer Monohydroxy di- oder multifunktionellen Carbonsäure zu Beginn des Vermischens und eines weiteren aktivierenden Anteils eines Neutralsalzes einer Monohydroxy di- oder multifunktionellen Carbonsäure, falls Aktivierung erwünscht wird. Die Carbonsäure ist ausgewählt aus der Gruppe bestehend aus Zitronensäure, Apfelsäure und 2-Methyl-Apfelsäure.

Die momentan bekannten Systeme, wo die Hydratation eines verzögerten Betons durch die Zugabe eines Abbindebeschleunigers beschleunigt wird, beziehen sich auf den Spritzbeton. Die bekannten Methoden zur Hydratationskontrolle haben den Nachteil, dass die Zementmischungen nach Zugabe des Beschleunigers sehr schnell abbinden. Das ist insbesondere bei der Anwendung als Spritzbeton meist auch erwünscht. Solche bekannten Systeme sind aber nicht geeignet, wenn die Zementmischung nach Aktivierung noch weiter verarbeitet werden muss. Bei den bekannten Systemen für die Spritzbetonanwendung ist eine weitere Verarbeitbarkeit nach der Aktivierung jedoch nicht gegeben. Weitere Nachteile der bekannten Abbinde- und Erhärtungsbeschleuniger sind zudem eine relativ geringe Frühfestigkeit in den ersten Stunden und Tagen und die ungenügende Stabilität der Lösung.

Es besteht also das Bedürfnis, einen Abbinde- und Erhärtungsbeschleuniger bereitzustellen, mit welchem eine schnell härtende Mörtel- oder Betonzusammensetzung zu einem beliebigen Zeitpunkt aktiviert werden kann, wobei die Mörtel- oder Betonzusammensetzung auch nach Aktivierung noch verarbeitet werden kann, und die Mörtel- oder Betonzusammensetzung eine hohe Frühfestigkeit aufweist und somit frühes Ausschalen ermöglicht.

### Darstellung der Erfindung

Der Erfindung liegt die Aufgabe zugrunde, einen Abbinde- und Erhärtungsbeschleuniger bereitzustellen, welcher einerseits das Abbinden beschleunigt, andererseits aber nach Zugabe zu einer Zement- oder Betonmischung die Weiterverarbeitbarkeit der Zement- oder Betonmischung für eine gewisse Zeit ermöglicht. Zudem ist erwünscht, mit dem Beschleuniger eine möglichst hohe Frühfestigkeit zu erzielen.

Erfindungsgemäss wird dies durch die Merkmale der unabhängigen Ansprüche erreicht.

Die Vorteile der Erfindung sind unter anderem darin zu sehen, dass eine zementöse Zusammensetzung Z nach der Aktivierung der Zement- oder Betonmischung mit dem erfindungsgemässen Beschleuniger B verarbeitbar bleibt. Dieses ermöglicht es, einen langzeitverzögerten Pumpbeton herzustellen, der vor Ort noch für eine maximal vordefiniert Zeit stehen gelassen werden kann. Auf Wunsch kann der Beton oder ein Teil des Betons aktiviert und anschliessend verwendet werden. Die Aktivierung bewirkt eine starke Abbindebeschleunigung, welche im Gegensatz zu nicht aktiviertem Beton zu massiv früheren Festigkeiten führt und beispielsweise auch ein früheres Ausschalen ermöglicht. Nach der Aktivierung des Betons bleibt aber die Verarbeitbarkeit für eine gewünschte Zeit vollständig erhalten.

Die Erfindung umfasst zudem die Verwendung des erfindungsgemässen Beschleunigers B zur Reaktivierung einer verzögerten zementösen Zusammensetzung Z1 umfassend Wasser, Zement und mindestens einen Verzögerer V1, wobei der Verzögerer **V1** ein Zuckerderivat, ein Phosphorsäurederivat, ein Phosphonsäurederivat und/oder eine Hydroxy- oder Polycarbonsäure ist. Zudem umfasst die Erfindung eine verarbeitbare, verzögerte, zementöse Zusammensetzung **Z** umfassend (a) Zement, (b) Wasser, (c) mindestens einen Verzögerer **V1,** und (d) mindestens einen erfindungsgemässen Beschleuniger **B**, ein Verfahren zu deren Herstellung, sowie ein Verfahren zur Beschleunigung des Abbindens und Erhärtens von verzögerten zementösen Zusammensetzungen. Weitere vorteilhafte Ausgestaltungen der Erfindung ergeben sich aus der Beschreibung und den Unteransprüchen.

### Weg zur Ausführung der Erfindung

Der erfindungsgemässe Abbinde- und Erhärtungsbeschleuniger **B** für zementöse Zusammensetzungen umfasst mindestens ein Aluminiumoxid **X** und mindestens eine verzögernde Komponente **K,** wobei der Beschleuniger B 40 bis 99.9 Gew.-% des Aluminiumoxids **X** und 0.1 bis 80 Gew.-% der mindestens einen verzögernden Komponente **K** umfasst, jeweils bezogen auf das Gesamtgewicht des Beschleunigers **B,** und wobei die mindestens eine verzögernde Komponente **K** eine organische Säure **S,** deren Salz, ein Zuckerderivat, ein Phosphorsäurederivat, ein Phosphonsäurederivat und/oder eine Hydroxy- oder Polycarbonsäure ist und wobei das Aluminiumoxid **X** geflammtes Aluminiumoxid (flashed alumina), kalziniertes Aluminiumoxid oder alpha Aluminiumoxid ist.

Das Aluminiumoxid **X** (Al₂O₃) ist kalziniertes Aluminiumoxid, geflammtes Aluminiumoxid (flashed alumina) oder alpha-Aluminiumoxid. Insbesondere bevorzugt ist ein kalziniertes rehydratisierbares Aluminiumoxid. Geeignetes Aluminiumoxid ist beispielsweise erhältlich bei Almatis GmbH, Deutschland, beispielsweise das Alphabond 300.

Als organische Säure **S** wird vorzugsweise eine Carbonsäure, besonders bevorzugt eine Monocarbonsäure, verwendet. Besonders bevorzugt ist die Ameisensäure, oder Essigsäure. Es können jedoch auch andere gleichwirkende organische Säuren verwendet werden. Ebenfalls geeignet ist die Oxalsäure. Als Salze der organischen Säuren sind insbesondere die Alkali- oder Erdalkalimetallsalze geeignet. Besonders bevorzugt sind Natrium- oder Calciumsalze, insbesondere Natriumformiat, Natriumacetat, Calciumformiat oder Calciumacetat, besonders bevorzugt Calciumformiat oder Calciumacetat.

Vorzugsweise umfasst oder besteht die verzögernde Komponente aus Zuckerderivaten, Phosphorsäurederivaten, Phosphonsäurederivaten und/oder Hydroxy- oder Polycarbonsäure. Bevorzugt sind Phosphonsäurederivate, vorzugsweise solche mit Hydroxy- und Aminogruppen, die Calcium ionen als Chelate binden können. Andere geeignete verzögernde Komponenten sind Hydroxycarbonsäuren und ihre Salze, wie Zitronen-, Glucon-, Wein-, Fumar-, Itacon-, Malon- und Glucoheptansäure; Polycarbonsäuren und ihre Salze, wie Polymalein-, Polyfumar-, Polyacryl- und Polymethacrylsäuren, vorzugsweise mit niedrigem Molekulargewicht; Kohlenhydrate, wie Zucker und Maissirup; sowie Lignosulfonate wie Calciumlignosulfonat. Hydroxycarbonsäuren sind von diesen bevorzugt. Ebenfalls geeignet sind Mischungen von mindestens einem Phosphonsäurederivat und mindestens einer verzögernden Komponente aus Zuckerderivaten, Phosphorsäurederivaten, und/oder Hydroxy- oder Polycarbonsäure.

Als Verflüssiger P kommen beispielsweise Lignosulfonate, sulfonierte Naphthalin-Formaldehyd Kondensate, sulfonierte Melamin-FormaldehydKondensate oder Polycarboxylatverflüssiger, wie sie beispielsweise in der Betonchemie als Hochleistungsverflüssiger bekannt sind, in Frage. Bevorzugt sind insbesondere Polycarboxylatverflüssiger wie sie beispielsweise in EP 0 056 627 B1, EP 0 840 712 B1, EP 1 136 508 A1, EP 1 138 697 B1 oder EP 1 348 729 A1 beschrieben sind. Besonders bevorzugt sind Verflüssiger, welche nach der polymeranalogen Umsetzung hergestellt wurden, wie beispielsweise beschrieben in EP 1 138 697 B1 oder EP 1 348 729 A1.

Die verzögernde Komponente **K** kann eine organische Säure S, deren Salz, ein Zuckerderivat, ein Phosphorsäurederivat, ein Phosphonsäurederivat und/oder eine Hydroxy- oder Polycarbonsäure oder Mischungen davon enthalten oder daraus bestehen. Es ist also möglich, dass die verzögernde Komponente **K** nur aus einer organischen Säure S oder deren Salz oder nur aus einem Zuckerderivat, einem Phosphorsäurederivat; einem Phosphonsäurederivat, einer Hydroxy- oder Polycarbonsäure besteht. Bevorzugt sind Beschleuniger, welche Mischungen aus mehreren verzögernden Komponenten **K** enthalten, beispielsweise mehrere verschiedene Säuren S, verschiedene Salze, oder Mischungen von Säuren **S**, Salzen, Zuckerderivaten, Phosphorsäurederivaten, Phosphonsäurederivaten und/oder Hydroxy- oder Polycarbonsäuren. Besonders bevorzugt sind Beschleuniger **B**, welche als verzögernde Komponenten **K** eine organische Säure **S** und/oder deren Salz und einen Verflüssiger **P** enthalten.

Der Beschleuniger **B** umfasst bevorzugt 40 bis 99 Gew.-%, noch mehr bevorzugt über 50 Gew.-%, insbesondere 51 bis 90 Gew.-%, am meisten bevorzugt 55 bis 85 Gew.-% Aluminiumoxid **X** und 0.1 bis 80 Gew.-%, bevorzugt 1 bis 60 Gew.-%, insbesondere bevorzugt 15 bis 45 Gew.-%, mindestens einer verzögernden Komponente **K,** jeweils bezogen auf das Gesamtgewicht des Beschleunigers **B.**

In einer besonders bevorzugten Ausführungsform umfasst der Beschleuniger **B** über 50 Gew.-%, insbesondere 51 bis 90 Gew.-%, am meisten bevorzugt 55 bis 85 Gew.-% Aluminiumoxid **X** und 0.1 bis 80 Gew.-%, bevorzugt 1 bis 60 Gew.-%, insbesondere bevorzugt 15 bis 45 Gew.-%, einer organischen Säure **S,** deren Salz, und/oder eines Zuckerderivats, eines Phosphorsäurederivats, eines Phosphonsäurederivats und/oder einer Hydroxy- oder Polycarbonsäure sowie 0.1 bis 15 Gew.-%, bevorzugt 0.2 bis 5 Gew.-% mindestens eines Verflüssigers **P.**

Der Beschleuniger **B** kann auch weitere Bestandteile enthalten. Beispiele für weitere Bestandteile sind Lösungsmittel, insbesondere Wasser, oder Additive, wie weitere beschleunigende Substanzen wie beispielsweise Thiocyanate, Nitrate oder Aluminiumsalze, Säuren oder deren Salze oder aminhaltige Substanzen wie Alkanolamine, Verzögerer, Schwindreduzierer, Entschäumer, oder Schaumbildner.

Die zusätzliche beschleunigende Substanz kann entweder im Beschleuniger **B** enthalten sein, gleichzeitig mit dem Beschleuniger **B** zur verzögerten zementösen Zusammensetzung **Z1** zugegeben werden, oder bereits beim Anmischen der verzögerten zementösen Zusammensetzung **Z1,** vorzugsweise mit dem Anmachwasser, zugegeben werden.

Unter der "verzögerten zementösen Zusammensetzung **Z1**" wird eine Zusammensetzung verstanden, welche Wasser, Zement und mindestens einen Verzögerer **V1** umfasst, welche aber noch nicht den erfindungsgemässen Beschleuniger **B** enthält, wobei der Verzögerer **V1** ein Zuckerderivat, ein Phosphorsäurederivat, ein Phosphonsäurederivat und/oder eine Hydroxy- oder Polycarbonsäure ist.

Um die gewünschte Verarbeitbarkeit nach der Aktivierung mit einem Beschleuniger **B** zu erreichen, wird dem Aluminiumoxid **X** eine verzögernd wirkende Substanz **K** zugegeben. Dies wird mit der organische Säure **S**, deren Salze oder dem Zuckerderivat, dem Phosphorsäurederivat, dem Phosphonsäurederivat und/oder der Hydroxy- oder Polycarbonsäure erreicht. Optimalerweise hat diese verzögernde Substanz keinen Einfluss auf das Abbindeverhalten selber. Zur verbesserten Verarbeitbarkeit kann je nach Bedarf allein oder zusätzlich ein Verflüssiger **P** als Bestandteil des Beschleunigers **B** verwendet werden. Der Verflüssiger **P** ist vorzugsweise in einer Menge von 0.1 - 15 Gew.-%, besonders bevorzugt von 0.2 bis 5 Gew.-%, bezogen auf das Gesamtgewicht des Beschleunigers, im Beschleuniger **B** enthalten. Als Verflüssiger wird vorteilhafterweise ein Polycarboxylatverflüssiger verwendet, wie er beispielsweise in EP 1 138 697 B1 oder EP 1 348 729 A1 beschrieben ist.

Der erfindungsgemässe Beschleuniger kann bei der Herstellung zusätzlich Alkanolamin, vorzugsweise in einer Menge von 0 - 10 Gew.-%, bezogen auf das Gesamtgewicht des Beschleunigers, enthalten. Als Alkanolamin wird beispielsweise Diethanolamin (DEA), Methyldiethanolamin (MDEA) oder Tris-(hydroxymethyl)-aminomethan (TRIS), vorzugsweise DEA, verwendet.

Weiterhin betrifft die vorliegende Erfindung die Verwendung eines erfindungsgemässen Beschleunigers **B** zur Reaktivierung einer verzögerten zementösen Zusammensetzung **Z1** umfassend Wasser, Zement und mindestens einen Verzögerer **V1**. Der Beschleuniger **B** kann zur Beschleunigung des Abbindens und Erhärtens von zementösen Zusammensetzungen, Zement in Abmischung mit latent hydraulischen Bindemitteln oder inerten Füllstoffen, Mörtel oder Beton verwendet werden. Eine bevorzugte Verwendung erfolgt im Transportmörtel oder Transportbeton, wobei der Beschleuniger dem Mörtel oder Beton in der Förderleitung oder der Spritzdüse, direkt in die Mischung zugegeben resp. zudosiert wird. Vorzugsweise wird ein Beschleuniger in Form einer Lösung oder Dispersion mit einem Flüssigdosiergerät zudosiert, ein pulverförmiger Beschleuniger mit einem Pulverdosiergerät. Die Zudosierung des Beschleunigers **B** zur verzögerten zementösen Zusammensetzung **Z1** erfolgt bei Bedarf, beispielsweise nach 0.5 bis 72 Stunden, vorzugsweise nach 1 bis 48 Stunden, nach Herstellung der verzögerten zementösen Zusammensetzung **Z1.**

Die Zugabe des Verzögerers **V1** zur zementösen Zusammensetzung **Z1** bewirkt, dass die Offenzeit der zementösen Zusammensetzung, während der die zementöse Zusammensetzung verarbeitbar ist, bis zu 12 Stunden oder mehr betragen kann. Wird kein Beschleuniger **B** zur Zusammensetzung gegeben, findet der Abbindebeginn der zementösen Zusammensetzung je nach Art und Menge des zugegebenen Verzögerers erst nach 12 Stunden oder mehr statt.

Die zementöse Zusammensetzung **Z1** umfasst vorzugsweise 0.01 bis 5 Gew.-% Verzögerer **V1** bezogen auf das Gewicht des Zementes.

Der Verzögerer **V1** ist ein Zuckerderivat, ein Phosphorsäurederivat, ein Phosphonsäurederivat und/oder eine Hydroxy- oder Polycarbonsäure. Das Zuckerderivat, das Phosphorsäurederivat, das Phosphonsäurederivat und/oder die Hydroxy- oder Polycarbonsäure des Beschleunigers **B** können gleich oder verschieden vom Verzögerer **V1** sein.

Die verarbeitbare, verzögerte, zementöse Zusammensetzung **Z1** ist, vor Zugabe des mindestens einen Beschleunigers **B,** vorzugsweise eine Mörtel- oder Betonzusammensetzung, insbesondere Transportmörtel oder Transportbeton. Nach Reaktivierung mit dem Beschleuniger **B** ist sie vorzugsweise für mindestens 15 Minuten, noch mehr bevorzugt für mindestens 30 Minuten verarbeitbar.

Unter "verarbeitbar" wird im ganzen vorliegenden Text verstanden, dass die verzögerte zementöse Zusammensetzung nach Aktivierung noch verformt, beispielsweise gegossen oder gepumpt, werden kann.

Unter "zementöse" Zusammensetzung wird eine Zusammensetzung verstanden, die als Zement mindestens 20 Gew.-%, bevorzugt mindestens 50 Gew.-% Portlandzement enthält, bezogen auf das Gesamtgewicht des Zements.

In einem weiteren Aspekt betrifft die vorliegende Erfindung ein Verfahren zur Herstellung einer verarbeitbaren, verzögerten, zementösen Zusammensetzung **Z,** wobei bei Bedarf zur Beschleunigung des Abbindens und Erhärtens einer verzögerten zementösen Zusammensetzung **Z1,** welche mindestens Wasser, Zement und mindestens einen Verzögerer **V1** enthält, mindestens ein erfindungsgemässer Beschleuniger **B** zugegeben wird. Der Beschleuniger **B** kann in fester oder flüssiger Form, beispielsweise als Lösung, Dispersion oder als Pulver zugegeben werden. Ein als Pulver vorliegender Beschleuniger kann vor der Anwendung in Wasser oder in einem anderen Lösungsmittel gelöst oder dispergiert werden. Das bevorzugte Lösungsmittel ist Wasser.

Der Beschleuniger **B** wird bevorzugt in einer Menge von 1 bis 15 Gew.-%, vorzugsweise 3 bis 10 Gew.-%, insbesondere bevorzugt 4 bis 7 Gew.-%, bezogen auf das Gewicht des Zements der verzögerten zementösen Zusammensetzung **Z1** zudosiert, um die gewünschte aktivierende Wirkung zu erzielen. Es können auch mehrere Beschleuniger **B** gemischt, oder ein Beschleuniger **B** und anderen beschleunigenden Substanzen, verwendet werden, um die gewünschte Wirkung zu erzielen. Beispielsweise kann die zusätzlich zum Beschleuniger **B** verwendete beschleunigende Substanz zum gleichen Zeitpunkt wie der Beschleuniger **B** oder bereits beim Anmischen der zementösen verzögerten Zusammensetzung zugefügt werden. Als beschleunigende Substanzen kommen beispielsweise Thiocyanate, Nitrate oder Aluminiumsalze, Säuren oder deren Salze oder aminhaltige Substanzen wie Alkanolamine in Frage.

Weiterhin betrifft die vorliegende Erfindung eine verarbeitbare, verzögerte, zementöse Zusammensetzung **Z** umfassend (a) Zement, (b) Wasser, (c) mindestens einen Verzögerer **V1,** und (d) mindestens einen erfindungsgemässen Beschleuniger **B.**

Die verarbeitbare, verzögerte, zementöse Zusammensetzung **Z** kann neben Zement, Wasser, und Verzögerer **V1** und dem mindestens einen Beschleuniger **B** weitere Bestandteile enthalten. Beispielsweise kann die Zusammensetzung neben Zement weitere Bindemittel enthalten wie beispielsweise Gips oder verschiedene Zemente, insbesondere Portlandzemente oder Tonerdeschmelzzemente und respektive deren Mischungen mit Flugaschen, Silica fume, Schlacke, Hüttensande und Kalksteinfiller oder gebrannter Kalk, ein latent hydraulisches Pulver oder ein inertes mikroskopisches Pulver. Zum Term "Gips" wird jede bekannte Form von Gips gezählt, insbesondere Calciumsulfat-α-Halbhydrat, Calciumsulfat-β-Halbhydrat oder Calciumsulfat-Anhydrit. Als Zement ist Portlandzement bevorzugt.

Weiterhin kann die erfindungsgemässe verarbeitbare, verzögerte, zementöse Zusammensetzung **Z** weitere Zuschlagstoffe wie Sand, Kies, Steine, Quarzmehl, Kreiden sowie als Additive übliche Bestandteile wie Betonverfüssiger, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Korrosionsinhibitoren, Verzögerer, Schwindreduzierer, Entschäumer oder Schaumbildner enthalten. Als Verflüssiger sind insbesondere Polycarboxylatverflüssiger, wie sie beispielsweise in der Betonchemie als Hochleistungsverflüssiger bekannt sind, bevorzugt. Solche Polycarboxylatverflüssiger sind beispielsweise in EP 0 056 627 B1, EP 0 840 712 B1, EP 1 136 508 A1, EP 1 138 697 B1 oder EP 1 348 729 A1 beschrieben. Besonders bevorzugt sind Verflüssiger, welche nach der polymeranalogen Umsetzung hergestellt wurden, wie beispielsweise beschrieben in EP 1 138 697 B1 oder EP 1 348 729 A1.

In einem weiteren Aspekt betrifft die vorliegende Erfindung ein Verfahren zur Beschleunigung des Abbindens und Erhärtens von verzögerten zementösen Zusammensetzungen **Z1,** wobei einem Gemisch, welches mindestens Wasser, Zement und mindestens einen Verzögerer **V1** enthält, ein erfindungsgemässer Beschleuniger **B** in einer Menge von 1 bis 15 Gew.-%, vorzugsweise 3 bis 10 Gew.-%, insbesondere bevorzugt 4 bis 7 Gew.-%, bezogen auf das Gewicht des Zements zugegeben wird.

Mit der vorliegenden Erfindung wird eine kontrollierte Aktivierung einer verzögerten Zusammensetzung ermöglicht und der Transportmörtel oder - beton kann über einen bestimmten Zeitpunkt transportiert und bei Bedarf, beispielsweise nach 0.5 bis 72 Stunden, vorzugsweise nach 1 bis 48 Stunden, nach Herstellung der verzögerten zementösen Zusammensetzung **Z1,** mit dem Beschleuniger **B** aktiviert werden.

Die erfindungsgemässe verarbeitbare, verzögerte, zementöse Zusammensetzung **Z** weist also verglichen mit herkömmlichen verzögerten Zusammensetzungen, welche mit einem Beschleuniger versetzt wurden, auch nach der Zugabe des Beschleunigers **B** eine gute Verarbeitbarkeit über eine längere Zeit, vorzugsweise mindestens 15 Minuten, auf. Zusätzlich werden mit den erfindungsgemässen Zusammensetzungen **Z** hervorragende Frühfestigkeitswerte erreicht. Dies ist besonders auf Baustellen erwünscht, wo der Zeitpunkt der Aktivierung im voraus nicht genau definiert werden kann weil aus logistischen, technischen oder marktwirtschaftlichen Gründen die angerührte Zementmasse über längere Zeit transportiert werden muss, bei Bedarf die Aktivierung aber sofort erwünscht ist und wo nach relativ kurzer Zeit, vorzugsweise nach drei bis vier Stunden nach Aktivierung, die verarbeitete zementöse Zusammensetzung begehbar oder belastbar sein muss.

### Ausführungsbeispiele

Es wurden mehrere Proben des Beschleunigers **B** gemäss den in Tabelle 1 angegeben Werten hergestellt, wobei pulverförmiges Aluminiumoxid mit einem Al₂O₃ Anteil von mindestens 88 Gew.-% (beispielsweise erhältlich als Alphabond 300 von Almatis GmbH, Deutschland) mit Calciumformiat-Pulver oder Calciumacetat-Pulver (beispielsweise erhältlich bei Fluka, Schweiz) und einem pulverförmigen Polycarboxylatverflüssiger (beispielsweise Sika®ViscoCrete®-125 Powder, erhältlich bei Sika Deutschland GmbH) vermischt wurden. Die Mengenangaben in Tabelle 1 sind Gew.-% bezogen auf den Zement. Die Beispiele **B1** bis **B9** sind erfindungsgemässe Beispiele, die Beispiele **C1** und **C2** sind Vergleichsbeispiele.

**Tabelle 1: Probenzusammensetzung in Gew.-% bezogen auf den Zement**

| Nr. | Al₂O₃ | Ca(HCOO)₂ | Ca(H₃CCOO)₂ | Verflüssiger | Wasser | Total Menge auf Zement |
|---|---|---|---|---|---|---|
| **B1** | 3.5 | 2.5 | | 0.07 | | 6.07 |
| **B2** | 4.5 | 2.5 | | 0.07 | | 7.07 |
| **B3** | 5.5 | 2.5 | | 0.07 | | 8.07 |
| **B4** | 6.5 | 2.5 | | 0.07 | | 9.07 |
| **B5** | 3.5 | | 0.5 | 0.07 | | 4.07 |
| **B6** | 3.5 | | 1 | 0.07 | | 4.57 |
| **B7** | 4 | | 1 | | 3.3 | 8.3 |
| **B8** | 3.5 | 2.5 | | | | 6 |
| **B9** | 3.5 | | | 0.07 | | 3.57 |
| **C1** | 3.5 | | | | | 3.5 |
| **C2** | | 2.5 | | 0.07 | | 2.57 |

Zur Herstellung der Beschleuniger **B1** bis **B6** und **B8** bis **B9** gemäss Tabelle 1 wurden die pulverförmigen Komponenten vermischt. Zur Herstellung des Beschleunigers **B7** wurden das pulverförmige Aluminiumoxid und das Calciumacetat-Pulver in Wasser dispergiert. Beschleuniger **B7** wurde als Dispersion verwendet, die anderen Beschleuniger als Pulver.

### 2. Mörteltests

Die Wirksamkeit der Beschleuniger **B** wurde im Mörtel getestet.

| Zusammensetzung der Mörtelmischung **(MM):** (Grösstkorn 8mm) | Menge |
|---|---|
| Portlandzement (Schweizer CEM II/A-D 52.5R) | 500 g |
| Kalksteinfiller | 145 g |
| Sand 0-1 mm | 497.5 g |
| Sand 1-4 mm | 797.5 g |
| Sand 4-8 mm | 560 g |

Die Sande, der Filler und der Zement wurden 1 Minute in einem Hobart-Mischer trocken gemischt. Innerhalb von 30 Sekunden wurde das Anmachwasser, in dem 0.8 Gew.-% bezogen auf den Zement eines Verzögerers basierend auf Polycarbonsäure (SikaTard®-930, erhältlich bei Sika Schweiz AG) sowie 1.2 Gew.-% bezogen auf den Zement eines Polycarboxylatverflüssigers (Sika®ViscoCrete®-3082, erhältlich bei Sika Schweiz AG) gelöst oder dispergiert war, zugegeben und noch weitere 2.5 Minuten gemischt. Die Gesamt-Mischzeit nass war 3 Minuten. Der Wasser/Zement-Wert (w/z-Wert) betrug 0.48.

Hydraulischen Bindemitteln können 1 bis 15 Gew.-%, vorzugsweise 3 bis 10 Gew.-%, des Beschleunigers **B,** bezogen auf das hydraulische Bindemittel zugegeben werden. In Tabelle 1 in der letzten Spalte ist die zugegebene Menge der einzelnen Beschleuniger angegeben.

Zur Bestimmung der Wirksamkeit der Beschleuniger **B** wurde die verzögerte Mörtelmischung **MM** zu verschiedenen Zeitpunkten nach der Herstellung mit den Beschleunigern nach den Beispielen **B1** bis **B9** aktiviert, und das Ausbreitmass (ABM) sowie die Druckfestigkeit bestimmt. Die Beispiele wurden mit den Vergleichsbeispielen **C1** und **C2,** sowie mit einem allgemeinen Beschleuniger aus Zitronensäure **C3** (Dosierung 6 Gew.-% bezogen auf den Zement) und einem herkömmlichen Spritzbetonbeschleuniger **C4** (Sigunit®-L53 AF, erhältlich bei Sika Schweiz AG) verglichen.

**Tabelle 2: Ausbreitmass (ABM) in mm nach 0, 15, und 30 Minuten (min) nach Aktivierung von Mörtelmischungen, die nach 4, 6, 8, 12, 16, 20 Stunden (h) nach der Herstellung aktiviert wurden; n.v. bedeutet nicht verarbeitbar da bereits steif.**

| Nr. | Beschleuniger. | Aktivierung nach h | ABM vor Aktivierung | ABM 0 min nach Akt. | ABM nach 15 min | ABM nach 30 min |
|---|---|---|---|---|---|---|
| 1 | **B1** | 4 | 220 | 235 | 205 | 173 |
| 2 | **B1** | 6 | 228 | 243 | 208 | 173 |
| 3 | **B1** | 8 | 228 | 248 | 208 | 183 |
| 4 | **B1** | 12 | 230 | 248 | 196 | 165 |
| 5 | **B1** | 16 | 245 | 268 | 232 | 199 |
| 6 | **B1** | 20 | 242 | 265 | 217 | 168 |
| 7 | **B2** | 6 | 252 | 264 | 220 | 184 |
| 8 | **B3** | 6 | 252 | 265 | 218 | 160 |
| 9 | **B4** | 6 | 252 | 243 | 184 | 137 |
| 10 | **B5** | 6 | 258 | 280 | 224 | 170 |
| 11 | **B6** | 6 | 258 | 280 | 260 | 214 |
| 12 | **B7** | 6 | 258 | 268 | 258 | 218 |
| 13 | **B8** | 6 | 259 | 240 | 205 | 179 |
| 14 | **B9** | 6 | 259 | 276 | 179 | 142 |
| 15 | **C1** | 6 | 259 | 217 | 145 | 128 |
| 16 | **C2** | 6 | 251 | 275 | 280 | 275 |
| 17 | **C3** | 6 | 253 | n.v. | n.v. | n.v. |
| 18 | **C4** | 6 | 250 | 107 | n.v. | n.v. |

Das Ausbreitmass (ABM) des Mörtels wurde gemäss EN 1015-3 bestimmt.

Tabelle 2 zeigt in den Beispielen der Nr. 1 bis 6, dass eine verzögerte Mörtelmischung jederzeit innerhalb von 4 bis 20 Stunden mit dem Beschleuniger **B1** aktivierbar ist. Zudem ist sehr schön ersichtlich, dass die Zusammensetzung, welche mit den Beschleunigern **B1** bis **B9** aktiviert wurde, nach 15 Minuten und meist auch noch nach 30 Minuten verarbeitbar ist. Als verarbeitbar wird hier bezeichnet, wenn das Ausbreitmass (ABM) einen Wert von 160 mm oder mehr aufweist. Das Vergleichsbeispiel **C1** ist bereits nach 15 Minuten nicht mehr verarbeitbar und bei den Vergleichsbeispielen **C3** und **C4** ist der Mörtel bereits nach Einmischen des Beschleunigers **C3** bzw. **C4** so steif, dass er nicht mehr verarbeitbar ist.

Die Prüfung zur Bestimmung der Druckfestigkeit erfolgte mittels eines Nadelpenetrometers (Mecmesin BFG500) und an Prismen (40 x 40 x 160mm) nach 3 Stunden, 4 Stunden und 5 Stunden (siehe Tabelle 3).

**Tabelle 3: Druckfestigkeiten in N/mm² nach 2, 3, 4, 5 und 24 Stunden (h) nach Aktivierung; n.f. bedeutet nicht fest.**

| Nr. | Beschleuniger | 2 h | 3 h | 4 h | 5 h | 24 h |
|---|---|---|---|---|---|---|
| 1 | **B1** | 0.34 | 1.9 | 2.3 | 3 | 29.1 |
| 2 | **B1** | 0.5 | 1.8 | 2.2 | 3.4 | 27.3 |
| 3 | **B1** | 0.52 | 1.8 | 2.2 | 3.6 | 31.3 |
| 4 | **B1** | 0.61 | 2.2 | 3 | 3.8 | 31.5 |
| 5 | **B1** | 0.49 | 1.9 | 2.2 | 2.9 | 29.4 |
| 6 | **B1** | 0.68 | 2.1 | 3.2 | 3.7 | 30.4 |
| 7 | **B2** | | 2.6 | 3.3 | 3.7 | |
| 8 | **B3** | | 4.5 | 5 | 5.4 | |
| 9 | **B4** | | 5 | 5.6 | 5.3 | |
| 10 | **B5** | | 2.8 | 4.2 | 4.5 | |
| 11 | **B6** | | 2.2 | 3.6 | 4.1 | |
| 12 | **B7** | | 1.6 | 2.4 | 3.6 | |
| 13 | **B8** | | 1.4 | 1.8 | 2.1 | |
| 14 | **B9** | | 3 | 4.8 | 5.1 | |
| 15 | **C1** | | 3 | 4.7 | 5.1 | |
| 16 | **C2** | | n.f. | n.f. | n.f. | |

Tabelle 3 zeigt, dass die Mörtelzusammensetzungen, welche mit den Beschleunigern **B1** bis **B9** aktiviert wurden eine sehr gute Frühfestigkeit aufweisen. Als gute Resultate werden insbesondere diejenigen angesehen, welche 4 Stunden nach der Aktivierung eine Druckfestigkeit von 2 N/mm² oder mehr aufweisen. Als ausgezeichnet werden diejenigen Resultate bezeichnet, die bereits nach 3 Stunden eine Druckfestigkeit von 2 N/mm² oder mehr aufweisen, gleichzeitig aber nach 15 Minuten und vorzugsweise auch noch nach 30 Minuten verarbeitbar sind. Besonders gute Resultate wurden daher mit den Beispielen der Nr. 1 bis 3, 7, 10 und 11, also mit den Beschleunigern **B1, B2, B5** und **B6,** erzielt. Das heisst, besonders bevorzugte Beschleuniger enthalten Aluminiumoxid, Verflüssiger und Calciumformiat beziehungsweise Calciumacetat. Aber auch Beschleuniger, die nur Aluminiumoxid und Calciumformiat (**B8**) oder Aluminiumoxid und Verflüssiger (**B9**) enthalten, sind geeignet. Nicht geeignet sind allerdings Beschleuniger, die nur aus Aluminiumoxid (**C1**) oder nur aus Calciumformiat und Verflüssiger (**C2**) bestehen. Der Beschleuniger **C1** weist zwar eine gute Frühfestigkeit auf, ist aber bereits nach 15 Minuten nicht mehr verarbeitbar, während der Beschleuniger **C2** nach 30 Minuten noch verarbeitbar ist, dafür aber nach 5 Stunden immer noch nicht fest ist. Da bei den Vergleichsbeispielen **C3** und **C4** der Mörtel bereits nach Einmischen des Beschleunigers **C3** bzw. **C4** so steif war, dass er nicht mehr verarbeitbar war, konnten keine Prismen gegossen werden und die Druckfestigkeit konnte nicht bestimmt werden.

Selbstverständlich ist die Erfindung nicht auf die gezeigten und beschriebenen Ausführungsbeispiele beschränkt.

## Patentansprüche

1. Abbinde- und Erhärtungsbeschleuniger **B** für zementöse Zusammensetzungen umfassend mindestens ein Aluminiumoxid X und mindestens eine verzögernde Komponente **K,** wobei der Beschleuniger **B** 40 bis 99.9 Gew.-% des Aluminiumoxids **X** und 0.1 bis 80 Gew.-% der mindestens einen verzögernden Komponente **K** umfasst, jeweils bezogen auf das Gesamtgewicht des Beschleunigers **B,** und wobei die mindestens eine verzögernde Komponente **K** eine organische Säure S, deren Salz, ein Zuckerderivat, ein Phosphorsäurederivat, ein Phosphonsäurederivat und/oder eine Hydroxy- oder Polycarbonsäure ist, und wobei das Aluminiumoxid **X** geflammtes Aluminiumoxid (flashed alumina), kalziniertes Aluminiumoxid oder alpha Aluminiumoxid ist.

2. Beschleuniger **B** nach Anspruch 1, **dadurch gekennzeichnet, dass** die verzögernde Komponente **K** ein Salz einer organische Säure **S** ist, wobei das Salz ein Alkali- oder Erdalkalimetallsalz ist.

3. Beschleuniger **B** nach Anspruch 2, **dadurch gekennzeichnet, dass** die verzögernde Komponente **K** Calciumformiat oder Calciumacetat ist.

4. Beschleuniger **B** nach Anspruch 1, **dadurch gekennzeichnet, dass** die verzögernde Komponente **K** Ameisensäure, Essigsäure oder Oxalsäure ist.

5. Beschleuniger **B** nach einem der vorhergehenden Ansprüche, **dadurch gekennzeichnet, dass** die verzögernde Komponente Zuckerderivate, Phosphorsäurederivate, Phosphonsäurederivate und/oder Hydroxy- oder Polycarbonsäure umfasst oder daraus besteht.

6. Beschleuniger **B** nach einem der vorhergehenden Ansprüche, **dadurch gekennzeichnet, dass** der Beschleuniger einen Verflüssiger **P** umfasst, wobei der Verflüssiger **P** Lignosulfonate, sulfonierte Naphthalin-Formaldehyd Kondensate, sulfonierte Melamin-FormaldehydKondensate oder Polycarboxylatverflüssiger umfasst oder daraus besteht.

7. Beschleuniger **B** nach einem Anspruch 6, **dadurch gekennzeichnet, dass** der Beschleuniger **B** 55 bis 85 Gew.-% des Aluminiumoxids **X**, 1 bis 60 Gew.-%, bevorzugt 10 bis 45 Gew.-%, mindestens der Säure S und/oder deren Salze und/oder des Zuckerderivats, des Phosphorsäurederivats, des Phosphonsäurederivats und/oder der Hydroxy- oder Polycarbonsäure, und 0.1 bis 15 Gew.-%, bevorzugt 0.2 bis 5 Gew.-% des Verflüssigers **P** umfasst, jeweils bezogen auf das Gesamtgewicht des Beschleunigers **B.**

8. Verarbeitbare, verzögerte, zementöse Zusammensetzung **Z,** umfassend
(a) Zement,
(b) Wasser,
(c) mindestens einen Verzögerer **V1,** wobei der Verzögerer **V1** ein Zuckerderivat, ein Phosphorsäurederivat, ein Phosphonsäurederivat und/oder eine Hydroxy- oder Polycarbonsäure ist, und
(d) mindestens einen Beschleuniger **B** gemäss einem der Ansprüche 1 bis 7.

9. Verwendung eines Beschleunigers **B** gemäss einem der Ansprüche 1 bis 7 zur Reaktivierung einer verzögerten zementösen Zusammensetzung **Z1** umfassend Wasser, Zement und mindestens einen Verzögerer **V1** wobei der Verzögerer **V1** ein Zuckerderivat, ein Phosphorsäurederivat, ein Phosphonsäurederivat und/oder eine Hydroxy- oder Polycarbonsäure ist.

10. Verwendung nach Anspruch 9, **dadurch gekennzeichnet, dass** die verzögerte zementöse Zusammensetzung **Z1** Transportmörtel oder - beton ist.

11. Verwendung nach einem der Ansprüche 9 oder 10, **dadurch gekennzeichnet, dass** nach Reaktivierung mit dem Beschleuniger **B** die zementöse Zusammensetzung mindestens 15 Minuten verarbeitbar ist.

12. Verfahren zur Beschleunigung des Abbindens und Erhärtens von verzögerten zementösen Zusammensetzungen **Z1, dadurch gekennzeichnet, dass** einem Gemisch, welches mindestens Wasser, Zement und mindestens einen Verzögerer **V1** enthält, wobei der Verzögerer **V1** ein Zuckerderivat, ein Phosphorsäurederivat, ein Phosphonsäurederivat und/oder eine Hydroxy- oder Polycarbonsäure ist, ein Beschleuniger **B** gemäss einem der Ansprüche 1 bis 7 in einer Menge von 1 bis 15 Gew.-%, vorzugsweise 3 bis 10 Gew.-%, bezogen auf das Gewicht des Zements, zugegeben wird.

## Claims

1. Setting and hardening accelerator **B** for cement-based compositions comprising at least one alumina **X** and at least one retarding component **K**, the accelerator **B** comprising 40 to 99.9 % by weight alumina **X** and 0.1 to 80 % by weight of the at least one retarding component **K,** each based on the total weight of the accelerator **B,** and the at least one retarding component **K** being an organic acid **S**, a salt thereof, a sugar derivative, a phosphoric acid derivative, a phosphonic acid derivative and/or a hydroxycarboxylic or polycarboxylic acid, and the alumina **X** being flashed alumina, calcined alumina or alpha-alumina.

2. Accelerator **B** according to claim 1, **characterised in that** the retarding component **K** is a salt of an organic acid **S,** the salt being an alkaline metal salt or alkaline earth metal salt.

3. Accelerator **B** according to claim 2, **characterised in that** the retarding component K is calcium formate or calcium acetate.

4. Accelerator **B** according to claim 1, **characterised in that** the retarding component **K** is formic acid, acetic acid or oxalic acid.

5. Accelerator B according to any of the preceding claims, **characterised in that** the retarding component comprises or consists of sugar derivatives, phosphoric acid derivatives, phosphonic acid derivatives and/or a hydroxycarboxylic or polycarboxylic acid.

6. Accelerator **B** according to any of the preceding claims, **characterised in that** the accelerator comprises a plasticizer **P,** the plasticizer **P** comprising or consisting of lignosulfonates, sulfonated naphthalene-formaldehyde condensates, sulfonated melamine-formaldehyde condensates or polycarboxylate plasticizers.

7. Accelerator **B** according to claim 6, **characterised in that** the accelerator **B** comprises 55 to 85 % by weight alumina **X**, 1 to 60 % by weight, preferably 10 to 45 % by weight, of at least the acid **S** and/or the salts thereof and/or the sugar derivative, the phosphoric acid derivative, the phosphonic acid derivative and/or the hydroxycarboxylic or polycarboxylic acid, and 0.1 to 15 % by weight, preferably 0.2 to 5 % by weight plasticizer **P,** each based on the total weight of the accelerator **B.**

8. Processable, retarded, cement-based composition **Z**, comprising
(a) cement,
(b) water,
(c) at least one retarder **V1,** the retarder **V1** being a sugar derivative, a phosphoric acid derivative, a phosphonic acid derivative and/or a hydroxycarboxylic or polycarboxylic acid, and
(d) at least one accelerator **B** according to any of claims 1 to 7.

9. Use of an accelerator **B** according to any of claims 1 to 7 for reactivating a retarded cement-based composition **Z1** comprising water, cement and at least one retarder **V1,** the retarder **V1** being a sugar derivative, a phosphoric acid derivative, a phosphonic acid derivative and/or a hydroxycarboxylic or polycarboxylic acid.

10. Use according to claim 9, **characterised in that** the retarded cement-based composition **Z1** is ready-mixed mortar or concrete.

11. Use according to any of claims 9 and 10, **characterised in that**, after reactivation by means of the accelerator **B,** the cement-based composition can be processed for at least 15 minutes.

12. Method for accelerating the setting and hardening of retarded cement-based compositions **Z1, characterised in that** an accelerator **B** according to any of claims 1 to 7 is added to a mixture, which contains at least water, cement and at least one retarder **V1,** the retarder **V1** being a sugar derivative, a phosphoric acid derivative, a phosphonic acid derivative and/or a hydroxycarboxylic or polycarboxylic acid, in an amount of from 1 to 15 % by weight, preferably 3 to 10 % by weight, based on the weight of the cement.

## Revendications

1. Accélérateur de prise et de durcissement **B** pour compositions cimentaires comprenant au moins un oxyde d'aluminium **X** et au moins un composant retardateur **K,** dans lequel l'accélérateur **B** comprend 40 à 99,9 % en poids de l'oxyde d'aluminium **X** et 0, 1 à 80 % en poids du au moins un composant retardateur **K,** respectivement par rapport au poids total de l'accélérateur **B,** et dans lequel le au moins un composant retardateur **K** est un acide organique **S**, son sel, un dérivé de sucre, un dérivé d'acide phosphorique, un dérivé d'acide phosphonique et/ou un acide hydroxy- ou polycarboxylique, et dans lequel l'oxyde d'aluminium est de l'oxyde d'aluminium **X** passé à la flamme (flashed alumina), de l'oxyde d'aluminium calciné ou de l'alpha-oxyde d'aluminium.

2. Accélérateur **B** selon la revendication 1, **caractérisé en ce que** le composant retardateur **K** est un sel d'un acide organique **S**, dans lequel le sel est un sel de métal alcalin ou de métal alcalinoterreux.

3. Accélérateur **B** selon la revendication 2, **caractérisé en ce que** le composant retardateur **K** est le formiate de calcium ou l'acétate de calcium.

4. Accélérateur **B** selon la revendication 1, **caractérisé en ce que** le composant retardateur **K** est l'acide formique, l'acide acétique ou l'acide oxalique.

5. Accélérateur **B** selon l'une quelconque des revendications précédentes, **caractérisé en ce que** le composant retardateur est constitué de dérivés de sucre, de dérivés d'acide phosphorique, de dérivés d'acide phosphonique et/ou d'acide hydroxy- ou polycarboxylique.

6. Accélérateur **B** selon l'une quelconque des revendications précédentes, **caractérisé en ce que** l'accélérateur comprend un liquéfacteur **P,** dans lequel le liquéfacteur **P** comprend ou est constitué des corps suivants : lignosulfonates, condensés de naphtalène et de formaldéhyde sulfonés, condensés de mélamine-formaldéhyde sulfonés ou liquéfacteurs de polycarboxylates.

7. Accélérateur **B** selon la revendication 6, **caractérisé en ce que** l'accélérateur **B** comprend 55 à 85 % en poids de l'oxyde d'aluminium **X**, 1 à 60 % en poids, de préférence 10 à 45 % en poids, d'au moins l'acide **S** et/ou de ses sels et/ou du dérivé de sucre, du dérivé d'acide phosphorique, du dérivé d'acide phosphonique et/ou de l'acide hydroxy- ou polycarboxylique, et 0,1 à 15 % en poids, de préférence 0,2 à 5 % en poids du liquéfacteur **P,** respectivement par rapport au poids total de l'accélérateur **B**.

8. Composition cimentaire façonnable retardée **Z,** comprenant :
(a) du ciment,
(b) de l'eau,
(c) au moins un retardateur **V1,** dans laquelle le retardateur **V1** est un dérivé de sucre, un dérivé d'acide phosphorique, un dérivé d'acide phosphonique et/ou un acide hydroxy- ou polycarboxylique, et
(d) au moins un accélérateur **B** selon l'une quelconque des revendications 1 à 7.

9. Utilisation d'un accélérateur **B** selon l'une quelconque des revendications 1 à 7 pour la réactivation d'une composition cimentaire retardée **Z1** comprenant de l'eau, du ciment et au moins un retardateur **V1,** dans laquelle le retardateur **V1** est un dérivé de sucre, un dérivé d'acide phosphorique, un dérivé d'acide phosphonique et/ou un acide hydroxy- ou polycarboxylique.

10. Utilisation selon la revendication 9, **caractérisée en ce que** la composition cimentaire retardée **Z1** est du mortier ou du béton transporté.

11. Utilisation selon l'une quelconque des revendications 9 ou 10, **caractérisée en ce que**, après réactivation avec un accélérateur **B,** la composition cimentaire peut être façonnée au moins pendant 15 minutes.

12. Procédé d'accélération de la prise et du durcissement de compositions cimentaires retardées **Z1, caractérisé par** un mélange qui contient au moins de l'eau, du ciment et au moins un retardateur **V1,** dans lequel le retardateur **V1** est un dérivé de sucre, un dérivé d'acide phosphorique, un dérivé d'acide phosphonique et/ou un acide hydroxy- ou polycarboxylique, un accélérateur **B** selon l'une quelconque des revendications 1 à 7 étant ajouté en quantité de 1 à 15 % en poids, de préférence de 3 à 10 % en poids, par rapport au poids du ciment.
